# EUROPEAN PATENT APPLICATION

(11) **EP 1 681 874 A1**
(43) Date of publication of application: **19.07.2006**
(21) Application number: 04762194.1
(22) Date of filing: 20.09.2004
(51) Int. Cl.: H04N 7/32

(54) **METHOD FOR CLIPING VIDEO ASSISTED BY CLIP IDENTIFIER**

(30) Priority: 17.10.2003 CN 200310100469
(71) Applicant: Central Research Academy of SVA Group, Shanghai 200032 (CN); Tsinghua University, Beijing 100084 (CN)
(72) Inventor: HE, Yun, Tsinghua University, Beijing 100084 (CN); CHEN, Quqing, Tsinghua University, Beijing 100084 (CN); XU, Jianfeng, Tsinghua University, Beijing 100084 (CN); CHEN, Jianwen, Tsinghua University, Beijing 100084 (CN); FU, Wenfang, Tsinghua University, Beijing 100084 (CN); XU, Xiaozhong, Tsinghua University, Beijing 100084 (CN); ZHAO, Haiwu, Shanghai 200032 (CN); CHEN, Yong, Shanghai 200032 (CN); ZHU, Weijia, Shanghai 200032 (CN); SONG, Li, Shanghai 200032 (CN)
(74) Representative: Grünecker, Kinkeldey, Stockmair & Schwanhäusser Anwaltssozietät
(86) International application number: PCT/CN2004/001061
(87) International publication number: WO 2005/039190

(57) **Abstract**

The invention relates to a video encoding and decoding technical field of the signal processing, especially relates to a method for video clip assisted by clip identifier. The method defines a clip identifier on the video encoding and decoding rule as an identifier used specially for video stream clip. If the encoded video bit stream is clipped, then said clip identifier is inserted to the bit stream or used to replace the original identifier which functions as a start flag. The clip of the video bit stream can be operated conveniently by the invention. The features of the invention are: the bits, which mark whether the clipped video bit stream may be decoded and displayed incorrectly or not, are not required to appear in the unclipped bit stream; if it clips at a certain point of the bit stream, then said identifier will appear at this point to indicate that a problem in which the picture can not be decoded normally due to the predictive reference data being clipped may appear.

## Description

### Field of invention

The invention relates to a video coding and decoding field in the signal processing, particularly, to a clip operation of the video bit stream.

### Background art

In the video encoding technology, the video sequence picture can be divided into several types according to different encoding methods: the first type picture is obtained by processing the data in said picture itself; the second type picture is obtained by predicting said picture by using the data of a reference picture appearing at a time preceding said picture; and the third type picture is obtained by predicting said picture by using the data of a reference picture appearing at a time following said picture and the data of a reference picture appearing at a time preceding said picture. Each of the pictures of three kinds obtained from three encoding methods has identifier at the start portion of the bit stream data thereof to mark the start of the bit stream data of said picture. Furthermore, the clip operation of the bit stream shall be supported effectively by an excellent video coding and decoding rule, and can be implemented based on an identifier preceding a string of bit stream. The identifier is composed of a start header used for searching conveniently and flag bits, which are, such as an identifier for marking the start of the picture data, an identifier for marking the start of the entire video sequence, an identifier for marking the end of the entire video sequence, and the like. Such identifiers shall not appear in other regions of the corresponding bit stream.

In the prior MPEG-2 video coding and decoding standard, frame I belongs to the first type picture, frame P belongs to the second type picture, and frame B belongs to the third type picture. A video sequence is divided into a series of groups of pictures (GOP), each GOP has a header of the group of pictures (group_of_pictures_header). When the video clip is implemented for the coded bit stream, these GOPs can be used conveniently as units, and the clip can be accessed by searching the start code of the header of the group of pictures (group_start_code).

In MPEG-2, when frame B, which employs bi-directional prediction, is introduced into the coding, a condition in which a frame B belonging to a previous GOP in the bit stream follows a frame I of the next GOP may occur. In this way, when a current GOP is clipped, a frame B following the frame I of the next GOP may not be decoded correctly. Thus, in order to clip the video conveniently in MPEG-2, two bits of a closed flag of the group of pictures (closed_gop) and a broken link flag (broken_link) are reserved in group_of_pictures_header to mark whether the decoding can be implemented normally or not.

The method for video clip assisted by these two bits is as follows:
Whether frame B following immediately after frame I (said frame I following immediately after GOP header) in the bit stream only employs backward prediction or intraframe coding is foreshowed by closed_gop. If it is, then closed_gop is 1, otherwise, closed_gop is 0. When closed_gop is 1, after clipping a previous GOP, the next GOP can still be decoded correctly.
Whether frame B (if there is) following immediately after frame I (said frame I following immediately after GOP header) in the bit stream can be decoded correctly is marked by broken_link. When encoding, broken_link is set to 0. After clipping a current GOP, if closed_gop of the header of the next GOP is 0, then broken_link will be set to 1, it indicates that frame B (if there is) following immediately after frame I in the bit stream is not outputted and displayed when decoding. After clipping a current GOP, if closed_gop of the header of the next GOP is 1, then broken_link will not be set, because frame B (if there is) following immediately after frame I in the bit stream can be decoded correctly.

The closed_gop and broken_link in MPEG-2 can solve excellently the problem of clipping the video bit stream while the third type picture exists therein.

However, because closed_gop and broken_link are reserved in the bit stream under MPEG-2 standard, so two bits to be reserved in the bit stream are required by each GOP, if the length of GOP is 15, and the frame rate is 30 frames per second, then there are four edit flag bits in each second, calculating the bit stream for one hour, there are 14400 bits in the bit stream regardless of whether the clipping is required or not, this is redundant to a certain extent.

### Summary

The object of the invention is to overcome the insufficiency of the prior video clip method and to provide a method for video clip assisted by clip identifier without reserving flag bits in the unclipped bit stream. Such method can achieve a result of reducing the redundant bits in the video bit stream, meanwhile the problem in which the third type picture may be decoded and displayed incorrectly caused by the video bit stream clip can also be solved. The firstmethod for implementing the technical scheme provided in the invention is: a clip identifier is defined on the video encoding and decoding rule as an identifier used specially for the video stream clip; if the encoded video bit stream is clipped, then said clip identifier is inserted into the bit stream, comprising specifically:
1) supposing that the picture obtained by processing the data in the picture itself is a first type picture; supposing that the picture obtained by predicting said picture itself by using the data of a reference picture appearing at a time preceding said picture is a second type picture; and supposing that the picture obtained by predicting said picture itself by using the data of a reference picture appearing at a time following said picture and the data of a reference picture appearing at a time preceding said picture is a third type picture; for the video sequence structure having the third type picture, if the third type picture references the first type picture appearing at a time following it, and is outputted in the video bit stream to follow the output of the first type picture, then said clip identifier is inserted to the start of the bit stream, which is located to follow the clip point, when the clip is performed to precede the first type picture in the video bit stream;
2) when the video is decoded, if said clip identifier is found during a procedure for looking up the next identifier in the bit stream, and the third type picture follows immediately after the first type picture, which follows said clip identifier, then the third type picture will not be decoded or displayed after decoding by the decoder.

The second method for implementing the technical scheme provided in the invention is: a clip identifier is defined on the video encoding and decoding rule as an identifier used specially for the video stream clip; if the encoded video bit stream is clipped, then said clip identifier is used to replace the original identifier, which functions as a start flag, in the bit stream, comprising specifically:
1) supposing that the picture obtained by processing the data in the picture itself is a first type picture; supposing that the picture obtained by predicting said picture itself by using the data of a reference picture appearing at a time preceding said picture is a second type picture; and supposing that the picture obtained by predicting said picture itself by using the data of a reference picture appearing at a time following said picture and the data of a reference picture appearing at a time preceding said picture is a third type picture; for the video sequence structure having the third type picture, if the third type picture references the first type picture appearing at a time following it, and is outputted in the video bit stream to follow the output of the first type picture, then said clip identifier is used to replace the identifier, which marks the start of the first type picture following the clip point, when the clip is performed to precede the first type picture in the video bit stream;
2) when the video is decoded, if said clip identifier is found during a procedure for looking up the next identifier, and the third type picture follows immediately after the first type picture, which uses said clip identifier as a start flag, then the third type picture will not be decoded or displayed after decoding by the decoder.

The third method for implementing the technical scheme provided in the invention is: a clip identifier is defined on the video encoding and decoding rule as an identifier used specially for the video stream clip; if the encoded video bit stream is clipped, then said clip identifier is inserted into the bit stream, comprising specifically:
1) supposing that the picture obtained by processing the data in the picture itself is a first type picture; supposing that the picture obtained by predicting said picture itself by using the data of a reference picture appearing at a time preceding said picture is a second type picture; and supposing that the picture obtained by predicting said picture itself by using the data of a reference picture appearing at a time following said picture and the data of a reference picture appearing at a time preceding said picture is a third type picture; for the video sequence structure having the third type picture, if the third type picture references the first type picture appearing at a time following it, and is outputted in the bit stream to preced the output of the first type picture, then said clip identifier is inserted to the end of the bit stream, which is located to precede the clip point, when the clip is performed to precede the first type picture in the video bit stream;
2) when the video is decoded, if said clip identifier is found during a procedure for looking up the next identifier in the bit stream, then the third type picture stored in the bit stream buffer region will be discarded by the decoder.
   The clip identifier defined in the invention should be a code, which can be identified uniquely, and which does not appear in other regions of corresponding bit stream. It can be composed of a start header for searching conveniently and flag bits and may have a length equal to that of other identifier in the bit stream.

The features and excellent effects of the invention:
In the method of the invention, when the video bit stream is unclipped, bits for marking whether it is decoded and displayed incorrectly or not after the video bit stream being clipped is not required to appear in the bit stream, so that the effect of reducing the redundant bits in the video bit stream can be reached.
The invention also solves correctly the problem in which the third type picture may be decoded and displayed mistakenly after clipping the video bit stream.
The method of the invention can be applied to a variety of video encoding and decoding standards and specifications where the video clip is required.

### Detailed description of preferred embodiments

Embodiments of the method for video clip assisted by clip identifier in the invention will be described in detail as follows:

### Embodiment 1:

The third type picture exists in the video bit stream, said third type picture references the first type picture appearing at a time following it, and is outputted in the bit stream following the output of the first type picture. In the video encoding and decoding specification, 000001 B7 is defined as a clip identifier used dedicatedly for video stream clip, wherein 000001 is a start header for searching conveniently, B7 are identifier bits, and the function of 000001 B7 in the bit stream is to identify uniquely. If the encoded bit stream is clipped, then said clip identifier is inserted into the bit stream, comprising specifically:
1) When the video is clipped before the first type picture in the video bit stream, said clip identifier is inserted to the start of the bit stream following the clipped point (if the third type picture exists to follow the first type picture, which follows immediately after said clip identifier, then said clip identifier marks that the third type picture may not be decoded correctly due to the predictive reference data being clipped);
2) When the video is decoded, if said clip identifier is found during a procedure for looking up the next identifier (Indicating that the clip has been performed at this point), and if the third type picture (such third type picture may not be decoded correctly due to short of the predictive reference data) following immediately after the first type picture, which follows the clip identifier, then said third type picture is not decoded or not outputted and displayed after decoding by the decoder.

### Embodiment 2:

The third type picture exists in the video bit stream, said third type picture references the first type picture appearing at a time following it, and is outputted in the video bit stream to follow the output of the first type picture. In the video encoding and decoding rule, 000001 B8 is defined as a clip identifier used dedicatedly for video stream clip, wherein 000001 is a start header for searching conveniently, B8 are identifier bits, and the function of 000001 B8 in the video bit stream is to identify uniquely. If the encoded video bit stream is clipped, then said clip identifier is used to replace the identifier which functions as the original start flag in the video bit stream, comprising specifically:
1) When the video is clipped before the first type picture in the video bit stream, an identifier 000001 B3 marking the start point of the first type picture following the clipped point is replaced by said clip identifier 000001 B8 (If the third type picture exists to follow the first type picture with said clip identifier as a start flag, then said clip identifier marks that the third type picture may not be decoded correctly due to the predictive reference data being clipped);
2) When the video is decoded, if said clip identifier is found during a procedure for looking up the next identifier (Indicating that the clip has been performed to precede the first type picture, which has said clip identifier as its start flag), and if the third type picture (such third type picture may not be decoded correctly due to short of the predictive reference data) follows immediately after the first type picture, which has said clip identifier as its start flag, then said third type picture is not outputted and displayed by the decoder.

### Embodiment 3:

The third type picture exists in the video bit stream, said third type picture references the first type picture appearing at a time following it, and is outputted in the bit stream to follow the output of the first type picture. In the video encoding and decoding specification, 000001 B7 is defined as a clip identifier used dedicatedly for video stream clip, wherein 000001 is a start header for searching conveniently, B7 are identifier bits, and the function of 000001 B7 in the bit stream is to identify uniquely. If the encoded video bit stream is clipped, then said clip identifier is inserted to the bit stream, comprising specifically:
1) When the video is clipped to precede the first type picture in the video bit stream, said clip identifier is inserted to the end of the bit stream preceding the clipped point (Said clip identifier marks that the third type picture may not be decoded correctly due to the predictive reference data being clipped);
2) When the video is decoded, if said clip identifier is found during a procedure for looking up the next identifier (Indicating that the clip has been performed at this point, if the third type picture exists to precede said clip identifier, then the third type picture may not be decoded correctly due to short of the predictive reference data), then the decoder will discard the third type picture stored in the bit stream buffer region and proceed to the subsequent decoding.

## Claims

1. A method for clipping video assisted by clip identifier, wherein a clip identifier is defined on the video encoding and decoding rule as an identifier used specially for the video stream clip; if the encoded bit stream is clipped, then said clip identifier is inserted into the video bit stream, said method comprising:
1) supposing that the picture obtained by using the data in said picture itself for processing is a first type picture; supposing that the picture obtained by using the data of a reference picture appearing at a time preceding said picture for predicting said picture itself is a second type picture; and supposing that the picture obtained by using the data of a reference picture appearing at a time following said picture and the data of a reference picture appearing at a time preceding said picture for predicting said picture itself is a third type picture; for the video sequence structure having the third type picture, if the third type picture references the first type picture appearing at a time following it, and is outputted in the bit stream to follow the output of the first type picture, then said clip identifier is inserted at the start of the bit stream following the clipped point when the video is clipped preceding the first type picture in the video bit stream;
2) when the video is decoded, if said clip identifier is found during a procedure for looking up the next identifier in the video bit stream, and the third type picture follows immediately after the first type picture, which follows said clip identifier, then said third type picture will not be decoded or not outputted and displayed after decoding by the decoder.

2. The method of claim 1, wherein said clip identifier is a code, which can be identified uniquely, and which does not appear in other regions of the corresponding bit stream.

3. The method of claim 1 or 2, wherein said identifier is composed of a start header used for searching conveniently and flag bits.

4. A method for clipping video assisted by clip identifier, wherein a clip identifier is defined on the video encoding and decoding rule as an identifier used specially for the video stream clip; if the encoded video bit stream is clipped, then said clip identifier is used to replace the identifier which functions as the original start flag in the bit stream, comprising specifically:
1) supposing that the picture obtained by using the data in said picture itself for processing is a first type picture; supposing that the picture obtained by using the data of a reference picture appearing at a time preceding said picture for predicting said picture itself is a second type picture; and supposing that the picture obtained by using the data of a reference picture appearing at a time following said picture and the data of a reference picture appearing at a time preceding said picture for predicting said picture itself is a third type picture; for the video sequence structure having the third type picture, if the third type picture references the first type picture appearing at a time following it, and is outputted in the bit stream to follow the output of the first type picture, then said clip identifier is used to replace the identifier, which marks the start of the first type picture following the clipped point, when the video clip is performed to precede the first type picture in the video bit stream;
2) when the video is decoded, if said clip identifier is found during a procedure for looking up the next identifier, and if the third type picture follows immediately after the first type picture which has said clip identifier as its start flag, then said third type picture will not be decoded or will not be outputted and displayed after being decoded by the decoder.

5. The method of claim 4, wherein said clip identifier is a code, which can be identified uniquely, and which does not appear in other regions of the corresponding bit stream.

6. The method of claim 4 or 5, wherein said clip identifier is composed of a start header used for searching conveniently and flag bits.

7. A method for clipping video assisted by clip identifier, wherein a clip identifier is defined on the video encoding and decoding rule as an identifier used specially for the video stream clip; if the encoded video bit stream is clipped, then said clip identifier is inserted into the bit stream, comprising specifically:
1) supposing that the picture obtained by using the data in said picture itself for processing is a first type picture; supposing that the picture obtained by using the data of a reference picture appearing at a time preceding said picture for predicting said picture itself is a second type picture; and supposing that the picture obtained by using the data of a reference picture appearing at a time following said picture and the data of a reference picture appearing at a time preceding said picture for predicting said picture itself is a third type picture; for the video sequence structure having the third type picture, if the third type picture references the first type picture appearing at a time following it, and is outputted in the bit stream to precede the output of the first type picture, then said clip identifier is inserted at the end of the bit stream preceding the clipped point when the video is clipped in the video bit stream to precede the first type picture;
2) when the video is decoded, if said clip identifier is found during a procedure for looking up the next identifier in the video bit stream, then said third type picture stored in the bit stream buffer region will be discarded by the decoder.

8. The method of claim 7, wherein said clip identifier is a code, which can be identified uniquely, and which does not appear in other regions of the corresponding bit stream.

9. The method of claim 7 or 8 wherein said identifier is composed of a start header used for searching conveniently and flag bits.
